# EUROPÄISCHE PATENTANMELDUNG

(11) **EP 0 657 144 A1**
(43) Veröffentlichungstag der Anmeldung: **14.06.1995**
(21) Anmeldenummer: 94114340.6
(22) Anmeldetag: 13.09.1994
(51) Int. Cl.: A61C 8/00

(54) **Enossales Einzelzahnimplantat**

(30) Priorität: 09.12.1993 DE 4342058
(71) Anmelder: ALTATEC Medizintechnische Elemente GmbH & Co. KG., 75449 Wurmberg (DE); IMZ-Fertigungs- und Vertriebsgesellschaft für dentale Technologie mbH, D-70794 Filderstadt (DE)
(72) Erfinder: Dürr, Walter, D-75196 Remchingen (DE); Kirsch, Axel, Dr., D-70184 Stuttgart (DE)
(74) Vertreter: Goddar, Heinz J., Dr.

(57) **Zusammenfassung**

Enossales Einzelzahnimplantat für einen festsitzenden Zahnersatz, mit einem im wesentlichen zylindrischen, in eine in einen Kieferknochen eingebrachte Bohrung einsetzbaren Grundkörper, der eine zu seinem koronalen Ende offene Blindbohrung aufweist, einer auf den koronalen Stirnrand des Grundkörpers aufsetzbaren Distanzhülse, einem in die Blindbohrung des Grundkörpers einsetzbaren und mit dem Grundkörper verdrehgesichert verbindbaren Implantatpfosten, einer Verbindungseinrichtung zum Befestigen der Distanzhülse auf dem Grundkörper und einem mit dem Implantatpfosten verbundenen Befestigungskopf für den Zahnersatz, dadurch gekennzeichnet, daß der Befestigungskopf und die Verbindungseinrichtung als einstückige, den Implantatpfosten (44) konzentrisch umgebende, zervikal offene glockenartige Ringhaube (46) ausgebildet sind, deren Ringschürze (50) die Stoßstelle zwischen dem Außenumfang des Grundkörpers (10) und der Distanzhülse (22) übergreift und in ihrem zervikalen Bereich derart ausgebildet ist, daß sie sanft in die zylindrische Umfangswandung des Grundkörpers übergeht.

## Beschreibung

Die Erfindung betrifft ein enossales Einzelzahnimplantat für einen festsitzenden Zahnersatz, mit einen im wesentlichen zylindrischen, in eine in einen Kieferknochen eingebrachte Bohrung einsetzbaren Grundkörper, der eine zu seinem koronalen Ende offene Blindbohrung aufweist, einer auf den koronalen Stirnrand des Grundkörpers aufsetzbaren Distanzhülse, einem in die Blindbohrung des Grundkörpers einsetzbaren und mit dem Grundkörper verdrehgesichert verbindbaren Implantatpfosten, einer Verbindungseinrichtung zum Befestigen der Distanzhülse auf dem Grundkörper und einem mit dem Implantatpfosten verbundenen Befestigungskopf für den Zahnersatz.

Ein derartiges enossales Einzelzahnimplantat ist aus der DE-PS 40 28 855 bekannt. Dabei bildet der Außenumfang der Distanzhülse eine subgingival mit dem umgebenden Gewebe in Kontakt stehende Außenfläche des Implantats, wobei zwischen dem Grundkörper und der Distanzhülse notwendigerweise eine erste Stoßstelle besteht. An die Distanzhülse schließt verdrehgesichert der Befestigungskopf mit dem Zahnersatz an, wobei hier notwendigerweise eine weitere Stoßstelle am Außenumfang des Implantats gebildet ist. Der Grundkörper, die Distanzhülse und der Befestigungskopf sind vorgefertigte Teile, die nur begrenzt an die anatomischen Besonderheiten eines bestimmten Patienten anpaßbar sind, wobei der Grundkörper, die Distanzhülse, der Implantatpfosten und der Befestigungskopf vorzugsweise aus einer körpergewebefreundlichen Titanlegierung bestehen.

Das bekannte Einzelzahnimplantat hat sich im Grundsatz durchaus bewährt, allerdings hat es sich als wünschenswert herausgestellt, die Anpassung des Implantates an körpereigene Gegebenheiten unter weitestgehender Reduzierung subgingivaler Stoßstellen am Außenumfang des Implantates weiter zu verbessern.

Der Erfindung liegt daher die Aufgabe zugrunde, das Einzelzahnimplantat der gattungsgemäßen Art dahingehend weiterzubilden, daß eine verbesserte Anpassung an die anatomischen Gegebenheiten des einzelnen Patienten unter weitestgehender Vermeidung von Stoßstellen am Außenumfang des Implantates ermöglicht wird.

Erfindungsgemäß wird diese Aufgabe dadurch gelöst, daß der Befestigungskopf und die Verbindungseinrichtung als einstückige, den Implantatpfosten konzentrisch umgebende, zervikal offene glockenartige Ringhaube ausgebildet sind, deren Ringschürze die Stoßstelle zwischen dem Außenumfang des Grundkörpers und der Distanzhülse übergreift und in ihrem zervikalem Bereich derart ausgebildet ist, daß sie sanft in die zylindrische Umfangswandung des Grundkörpers übergeht.

Dabei kann vorgesehen sein, daß der Grundkörper nahe seinem koronalen Stirnrand an seinem Außenumfang eine umlaufende Ringeinschnürung zum Aufnehmen des zervikalen Stirnrandes der Ringschürze der Ringhaube aufweist.

Die Erfindung schlägt auch vor, daß die Ringhaube mit dem Implantatpfosten einstückig ausgebildet ist.

Eine weiter Ausführungsform sieht vor, daß der Implantatpfosten und die Ringhaube gemeinsam gegossen sind.

Nach der Erfindung kann auch vorgesehen sein, daß die Ringhaube vor dem Verbinden mit dem Grundkörper an ihrer koronalen Seite mit dem Zahnersatz versehen ist.

Die Erfindung schlägt ggf. auch vor, daß der Zahnersatz zumindest teilweise einstückig mit der Ringhaube hergestellt ist.

Eine weitere Ausführungsform der Erfindung ist dadurch gekennzeichnet, daß die Ringhaube und der Zahnersatz gemeinsam gegossen sind.

Die Erfindung kann insbesondere auch dadurch gekennzeichnet sein, daß die Blindbohrung des Grundkörpers in ihrem zervikalen Bereich mit einem Innengewinde versehen ist und in ihrem koronalen Bereich eine bis zum koronalen Stirnrand des Grundkörpers reichende Ringausnehmung mit glatter Innenwandung aufweist, deren Durchmesser größer ist als derjenige des mit dem Innengewinde versehenen Bereiches der Blindbohrung; daß die Distanzhülse mit einem zervikalen Zentrierbund, dessen Außendurchmesser dem Innendurchmesser der Ringausnehmung entspricht, versehen ist und eine Schulter zur Anlage an den koronalen Stirnrand des Grundkörpers aufweist, wobei eine zervikale Stirnfläche des Zentrierbundes und eine hierzu komplementäre, die Ringausnehmung zu dem mit dem Innengewinde versehenen Bereich der Blindbohrung des Grundkörpers begrenzende Ringschulter des Grundkörpers mit je mindestens einem komplementären Formschlußelement zum verdrehgesicherten Festlegen der Distanzhülse gegenüber dem Grundkörper versehen sind: daß eine in ihrem zervikalen Bereich mit einem zu dem Innengewinde des Grundköroers entsprechenden Außengewinde versehene Innenhülse vorgesehen ist, deren glatter Außendurchmesser im Bereich des Zentrierbundes der Distanzhülse dem Innendurchmesser der Distanzhülse entspricht und die nahe ihrem koronalen Ende eine Außenschulter zur Anlage an den koronalen Stirnrand der Distanzhülse aufweist, die beim Einschrauben der Innenhülse in den Grundkörper die Distanzhülse in formschlüssig verdrehgesicherten Eingriff mit dem Grundkörper drückt; und daß der Implantatpfosten in einer koronal offenen Innenbohrung der Innenhülse befestigbar ist.

Nach der Erfindung kann auch vorgesehen sein, daß der Implantatpfosten in die Innenbohrung einzementierbar ist.

Die Erfindung schlägt auch vor, daß der Implantatpfosten in die Innenbohrung einschraubbar ist.

Dabei kann vorgesehen sein, daß die Innenhülse an ihrem koronalen Ende eine Ansetzeinrichtung für ein Einschraubwerkzeug aufweist.

Die Erfindung schlägt auch vor, daß die Ansetzeinrichtung der Innenhülse durch eine polygonale Ausbildung des koronalen Außenrandbereiches der Innenhülse gebildet ist.

Eine weitere Ausführungsform sieht vor, daß die Distanzhülse nahe ihrem koronalen Stirnrand an ihrer Außenwandung wenigstens eine Einbuchtung zum Aufnehmen von Zement zum verdrehgesicherten Verbinden der Ringhaube mit der Distanzhülse aufweist.

Das Einzelimplantat nach der Erfindung kann auch dadurch gekennzeichnet sein, daß die Distanzhülse nahe ihrem koronalen Stirnrand umlaufend konkav ausgebildet ist.

Der Erfindung liegt die überraschende Erkenntnis zugrunde, daß es gelingt, das gattungsgemäße Einzelzahnimplantat in seiner dauerhaften Integrierbarkeit in den Kiefer dadurch drastisch zu verbessern, daß in Abkehr von der bislang als notwendig erachteten Sandwichbauweise, bei der auf den in den Kieferknochen eingesetzten Grundkörper aufeinanderfolgend verdrehgesichert mehrere Einzelkomponenten aufgesetzt werden, wie dies auch in der DE-PS 39 17 690 beschrieben ist, eine vorzugsweise einstückig mit dem Implantatpfosten anatomisch "richtig" gegossene und an den jeweiligen Patienten angepaßte Ringhaube vorgesehen wird, welche die nicht an die anatomischen Besonderheiten des betreffenden Patienten protethisch angepaßten Komponenten des Implantates übergreift und insgesamt nach außen abschließt, so daß im subgingivalen Bereich eine optimale Anpassung der Außenwandung des Implantates an das Körpergewebe und die individuelle Kieferform gewährleistet wird.

Das gesamte Implantat ist dabei gleichsam gekapselt, indem seine Außenwandung lediglich noch durch den Grundkörper und die Ringhaube sowie den vorzugsweise ebenfalls einstückig hiermit ausgebildeten Zahnersatz, z. B. in Form einer Krone, gebildet ist. In besonders bevorzugter Ausführungsform werden die Krone, der Implantatpfosten und die Ringhaube entsprechend einem anatomisch richtigen Abdruck gegossen, woraufhin dann der Implantatpfosten nach Entfernen der üblicherweise verwendeten Verschlußschraube in die Blindbohrung des in dem Kieferknochen bereits eingewachsenen Grundkörpers eingesetzt und dort einzementiert wird.

Durch die erfindungsgemäße Konstruktion läßt sich der Einheilprozeß für das Einzelimplantat wesentlich verbessern, so daß gegenüber den bekannten Implantaten deutlich verlängerte Gebrauchszeiten gegeben sind. Die an den Patienten zu stellenden Anforderungen bezüglich Zahnhygiene, die Sauberhaltung des Zahnersatzes bwz. der freiliegenden Teile des Implantates betreffend, lassen sich wesentlich einfacher erfüllen als bei den bekannten Einzelzahnimplantaten.

Weitere Merkmale und Vorteile der Erfindung ergeben sich aus den Ansprüchen und aus der nachstehenden Beschreibung, in der ein Ausführungsbeispiel anhand der schematischen Zeichnungen im einzelnen erläuert ist. Dabei zeigt
- Fig. 1: ein Ausführungsbeispiel eines Einzelzahnimplantates nach der Erfindung im Schnitt durch seine Längsmittelachse in zusammengebautem Zustand;

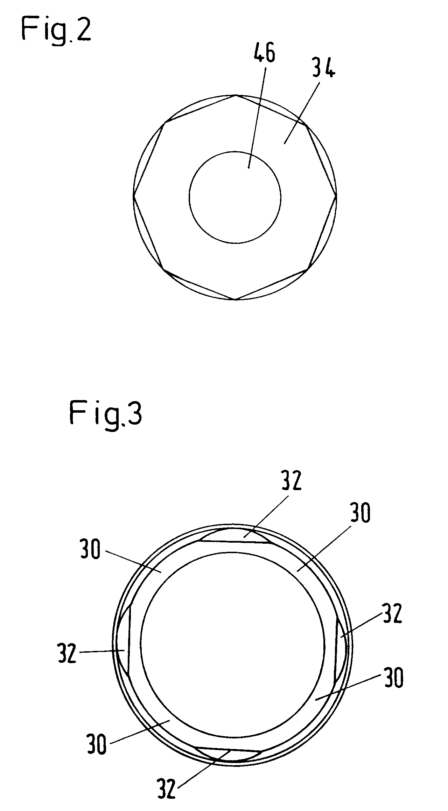

- Fig. 2: eine Innenhülse des Einzelzahnimplantates von Fig. 1 in der Draufsicht in Richtung der Pfeile II - II von Fig. 1; und
- Fig. 3: einen Schnitt entlang der Linie III - III von Fig. 1.

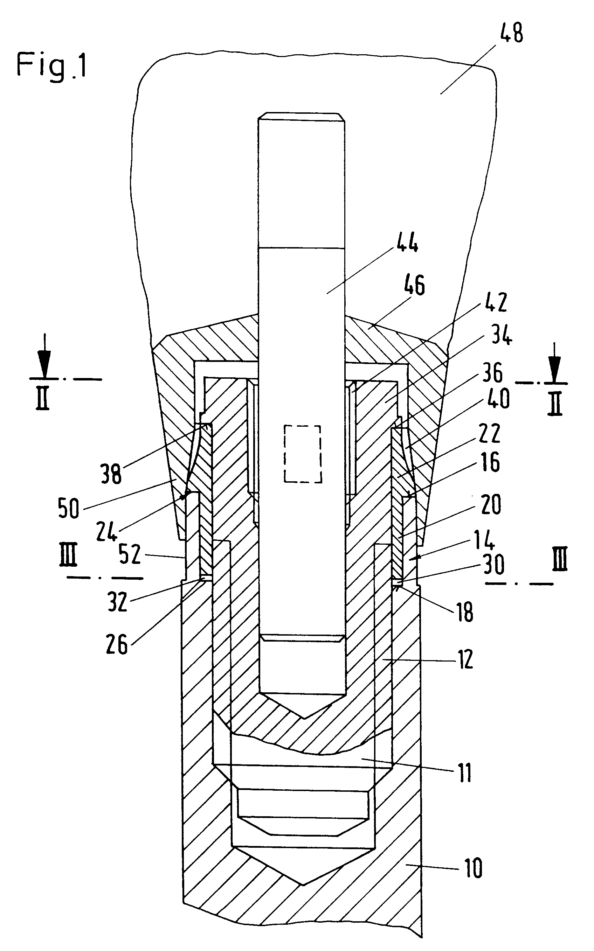

Wie Fig. 1 erkennen läßt, weist das Einzelzahnimplantat nach der Erfindung bei dem dort gezeigten Ausführungsbeispiel einen Grundkörper 10 aus einer Titanlegierung auf, wie er beispielsweise in der DE-PS 40 28 855 beschrieben ist, auf die insoweit zur weiteren Erläuterung verwiesen wird. Der Grundkörper 10 weist eine Blindbohrung 11 auf, die zu seinem in Fig. 1 oben liegenden koronalen Ende offen ist. Der Grundkörper 10 ist in seinem zervikalen Längsbereich mit einem Innengewinde 12 versehen. Nahe seinem koronalen Ende weist der Grundkörper 10 eine Ringausnehmung 14 auf, die sich bis zu einem koronalen, ringförmigen Stirnrand 16 des Grundkörpers 10 erstreckt. Der Innendurchmesser der Ringausnehmung 14 ist größer als der Innendurchmesser der Blindbohrung 11 des Grundkörpers 10 im Bereich des Innengewindes 12, wobei die Ringausnehmung 14 an ihrem zervikalen Ende mit einer im wesentlichen radial bezüglich der Längsmittelachse des Grundkörpers 10 nach innen vorspringenden Ringschulter 18 versehen ist.

In die Ringausnehmung 14 des Grundkörpers 10 ist ein Zentrierbund 20 einer Distanzhülse 22, die ebenfalls aus einer Titanlegierung besteht, eingesetzt, wobei die Distanzhülse 22 mit einer zervikalen Schulter 24 versehen ist, die an dem Stirnrand 16 des Grundkörpers 10 anliegt. An einer zervikalen Stirnfläche 26 der Distanzhülse 22 und an der Ringschulter 18 des Grundkörpers 10 sind zueinander komplementäre Formschlußelemente in Form von Zungen 30 und Ausnehmungen 32 vorgesehen, die den Distanzhülsen-Formschlußelementen zwischen dem Distanzhülsen-Oberteil und dem Grundkörper nach der DE-PS 40 28 855 entsprechen, auf die insoweit zur weiteren Erläuterung verwiesen wird.

In das Innengewinde 12 des Grundkörpers 10 ist eine Innenhülse 34, ebenfalls aus einer Titanlegierung bestehend, eingeschraubt, die mit einer nahe ihrem koronalen Ende vorgesehenen Außenschulter 36 an einem koronalen Stirnrand 28 der Distanzhülse 22 anliegt und die Distanzhülse 22 im eingeschraubten Zustand so gegen den Grundkörper 10 drückt, daß durch den formschlüssigen Eingriff der Formschlußzungen 30 und der Formschlußausnehmungen 32 die Distanzhülse 22 verdrehgesichert mit dem Grundkörper 10 verbunden ist. Die Distanzhülse 22 ist in ihrem koronalen Bereich mit einer konkaven, umlaufenden Einbuchtung 40 versehen.

In eine zum koronalen Ende offene Innenbohrung 42 der Innenhülse 34 ist ein zylindrischer Implantatpfosten 44 eingesetzt, der einstückig mit einer glockenartigen Ringhaube 46 aus einem Metall gegossen ist, wie es in der Zahnprothetik für Kronenaufbauten oder dergleichen Verwendung findet. Mit der Ringhaube 46 ist ein Zahnersatz in Form einer Krone 48 fest verbunden. Die Ringhaube 50 übergreift mit einer Ringschürze 50 das koronale Ende des Grundkörpers 10, wobei die Ringschürze 50 sanft in eine Ringeinschnürung 52 des Grundkörpers 10 in dessen Umfangswandung übergeht.

Die mit dem Implantatpfosten 46 einstückig ausgebildete Ringhaube 46, ggf. mit der Krone 48, wird bzw. werden nach den individuellen Erfordernissen des betreffenden Patienten einstückig gegossen. Der Implantatpfosten 44 wird dann unter Überschieben der Ringhaube 46 über den koronalen Rand des Grundkörpers 10 in die Innenbohrung 42 der Innenhülse 34 eingesetzt und dort verklebt. Die Einbuchtung 40 am Außenumfang der Distanzhülse 22 wird dabei mit Zement gefüllt, so daß die Ringhaube 46 verdrehgesichert mit der ihrerseits durch das Zusammenwirken der Formschlußelemente 30, 32 verdrehgesichert mit dem Grundkörper 10 verbundenen Distanzhülse 10 verbunden werden kann. Dadurch, daß anders als bei den bisher bekannten Sandwich-Aufbauten nur eine einzige Stoßstelle zwischen der Ringhaube 46 und dem Außenumfang des Grundkörpers 10 vorgesehen ist, ergibt sich, zusammen mit der anatomischen Anpassung der Form der Ringhaube 46 an die Gegebenheiten bei dem betreffenden Patienten, gegenüber den bisher bekannten Konstruktionen eine wesentlich verbesserte Anpassung im subgingivalen Bereich.

Im übrigen zeigt die Zeichnung auch, daß die Innenhülse 34 nahe ihrem koronalen Ende an ihrem Außenumfang polygonal ausgebildet ist, so daß mittels eines entsprechenden Schlüssels ein einwandfreies Einschrauben der Innenhülse 34 in den Grundkörper 10 gewährleistet ist.

Die in der vorstehenden Beschreibung, in der Zeichung sowie in den Ansprüchen offenbarten Merkmale der Erfindung können sowohl einzeln als auch in beliebiger Kombination für die Verwirklichung der Erfindung in ihren verschiedenen Ausführungsformen wesentlich sein. 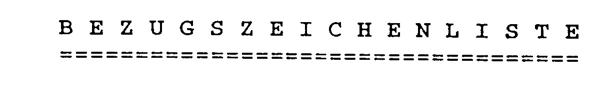
- 10: Grundkörper
- 11: Blindbohrung
- 12: Innengewinde
- 14: Ringausnehmung
- 16: Stirnrand
- 18: Ringschulter
- 20: Zentrierbund
- 22: Distenzhülse
- 24: Schulter
- 26: Stirnfläche
- 30: Formschlußzunge
- 32: Formschlußausnehmung
- 34: Innenhülse
- 36: Außenschulter
- 38: Stirnrand
- 40: Einbuchtung
- 42: Innenbohrung
- 44: Implantatpfosten
- 46: Ringhaube
- 48: Krone
- 50: Ringschürze
- 52: Ringeinschnürung

## Patentansprüche

1. Enossales Einzelzahnimplantat für einen festsitzenden Zahnersatz, mit einem im wesentlichen zylindrischen, in eine in einen Kieferknochen eingebrachte Bohrung einsetzbaren Grundkörper, der eine zu seinem koronalen Ende offene Blindbohrung aufweist, einer auf den koronalen Stirnrand des Grundkörpers aufsetzbaren Distanzhülse, einem in die Blindbohrung des Grundkörpers einsetzbaren und mit dem Grundkörper verdrehgesichert verbindbaren Implantatpfosten, einer Verbindungseinrichtung zum Befestigen der Distanzhülse auf dem Grundkörper und einem mit dem Implantatpfosten verbundenen Befestigungskopf für den Zahnersatz, dadurch gekennzeichnet, daß der Befestigungskopf und die Verbindungseinrichtung als einstückige, den Implantatpfosten (44) konzentrisch umgebende, zervikal offene glockenartige Ringhaube (46) ausgebildet sind, deren Ringschürze (50) die Stoßstelle zwischen dem Außenumfang des Grundkörpers (10) und der Distanzhülse (22) übergreift und in ihrem zervikalen Bereich derart ausgebildet ist, daß sie sanft in die zylindrische Umfangswandung des Grundkörpers übergeht.

2. Einzelzahnimplantat nach Anspruch 1, dadurch gekennzeichnet, daß der Grundkörper (10) nahe seinem koronalen Stirnrand (16) an seinem Außenumfang eine umlaufende Ringeinschnürung (52) zum Aufnehmen des zervikalen Stirnrandes der Ringschürze (50) der Ringhaube (46) aufweist.

3. Einzelzahnimplantat nach Anspruch 1 oder 2, dadurch gekennzeichnet, daß die Ringhaube (46) mit dem Implantatpfosten (44) einstückig ausgebildet ist.

4. Einzelzahnimplantat nach einem der vorangehenden Ansprüche, dadurch gekennzeichnet, daß der Implantatpfosten (44) und die Ringhaube (46) gemeinsam gegossen sind.

5. Einzelzahnimplantat nach einem der vorangehenden Ansprüche, dadurch gekennzeichnet, daß die Ringhaube (46) vor dem Verbinden mit dem Grundkörper (10) an ihrer koronalen Seite mit dem Zahnersatz (48) versehen ist.

6. Einzelzahnimplantat nach Anspruch 5, dadurch gekennzeichnet, daß der Zahnersatz (48) zumindest teilweise einstückig mit der Ringhaube (46) hergestellt ist.

7. Einzelzahnimplantat nach Anspruch 6, dadurch gekennzeichnet, daß die Ringhaube (46) und der Zahnersatz (48) gemeinsam gegossen sind.

8. Einzelzahnimplantat nach einem der vorangehenden Ansprüche, dadurch gekennzeichnet, daß die Blindbohrung (11) des Grundkörpers in ihrem zervikalen Bereich mit einem Innengewinde (12) versehen ist und in ihrem koronalen Bereich eine bis zum koronalen Stirnrand (16) des Grundkörpers (10) reichende Ringausnehmung (14) mit glatter Innenwandung aufweist, deren Durchmesser größer ist als derjenige des mit dem Innengewinde (12) versehenen Bereiches der Blindbohrung (12); daß die Distanzhülse (22) mit einem zervikalen Zentrierbund (20), dessen Außendurchmesser dem Innendurchmesser der Ringausnehmung (14) entspricht, versehen ist und eine Schulter (24) zur Anlage an den koronalen Stirnrand (16) des Grundkörpers (10) aufweist, wobei eine zervikale Stirnfläche (26) des Zentrierbundes (20) und eine hierzu komplementäre, die Ringausnehmung (14) zu dem mit dem Innengewinde (12) versehenen Bereich der Blindbohrung (11) des Grundkörpers (10) begrenzende Ringschulter (18) des Grundkörpers (10) mit je mindestens einem komplementären Formschlußelement (30, 32) zum verdrehgesicherten Festlegen der Distanzhülse (22) gegenüber dem Grundkörper (10) versehen sind; daß eine in ihrem zervikalen Bereich mit einem zu dem Innengewinde (12) des Grundkörpers (19) entsprechenden Außengewinde versehene Innenhülse (34) Vorgesehen ist, deren glatter Außendurchmesser im Bereich des Zentrierbundes (20) der Distanzhülse (22) dem Innendurchmesser der Distanzhülse (22) entspricht und die nahe ihrem koronalen Ende eine Außenschulter (36) zur Anlage an den koronalen Stirnrand (38) der Distanzhülse (22) aufweist, die beim Einschrauben der Innenhülse (34) in den Grundkörper (10) die Distanzhülse in formschlüssig verdrehgesicherten Eingriff mit dem Grundkörper (10) drückt; und daß der Implantatpfosten (44) in einer koronal offenen Innenbohrung (42) der Innenhülse (34) befestigbar ist.

9. Einzelzahnimplantat nach Anspuch 8, dadurch gekennzeichnet, daß der Implantatpfosten (44) in die Innenbohrung (42) einzementierbar ist.

10. Einzelzahnimplantat nach Anspruch 8, dadurch gekennzeichnet, daß der Implantatpfosten (44) in die Innenbohrung (42) einschraübbar ist.

11. Einzelzahnimplantat nach einem der Ansprüche 8 bis 10, dadurch gekennzeichnet, daß die Innenhülse (34) an ihrem koronalen Ende eine Ansetzeinrichtung für ein Einschraubwerkzeug aufweist.

12. Einzelzahnimplantat nach Anspruch 11, dadurch gekennzeichnet, daß die Ansetzeinrichtung der Innenhülse (34) durch eine polygonale Ausbildung des koronalen Außenrandbereiches der Innenhülse (34) gebildet ist.

13. Einzelzahnimplantat nach einem der Ansprüche 8 bis 12, dadurch gekennzeichnet, daß die Distanzhülse (22) nahe ihrem koronalen Stirnrand an ihrer Außenwandung wenigstens eine Einbuchtung (40) zum Aufnehmen von Zement zum verdrehgesicherten Verbinden der Ringhaube (46) mit der Distanzhülse (22) aufweist.

14. Einzelzahnimplantat nach Anspruch 13, dadurch gekennzeichnet, daß die Distanzhülse (22) nahe ihrem koronalen Stirnrand (38) umlaufend konkav ausgebildet ist.
